# EUROPEAN PATENT APPLICATION

(11) **EP 4 687 200 A1**
(43) Date of publication of application: **04.02.2026**
(21) Application number: 25183773.8
(22) Date of filing: 18.06.2025
(51) Int. Cl.: H01M 50/159, H01M 50/164, H01M 50/184, H01M 50/188, H01M 50/19

(54) **CAP ASSEMBLY AND SECONDARY BATTERY INCLUDING SAME**

(30) Priority: 31.07.2024 KR 20240101992
(71) Applicant: SAMSUNG SDI CO., LTD., Yongin-si, Gyeonggi-do 17084 (KR)
(72) Inventor: KIM, Keeyun, 17084 Yongin-si (KR)
(74) Representative: Marks & Clerk LLP

(57) **Abstract**

A cap assembly includes a cap plate having a through hole formed therein, a rivet terminal inserted into the through hole and placed through the cap plate, a terminal plate joined to one end of the rivet terminal on an upper surface of the cap plate, and a gasket inserted into the through hole and which insulates the cap plate and the rivet terminal, the rivet terminal having a maximum radial width less than the through hole.

## Description

### BACKGROUND

### 1. Field

The present disclosure relates to a cap assembly and a secondary battery including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In the case of a secondary battery in which an electrode assembly is housed in a case, and then the case and a cap assembly are assembled, there is a problem in that the space inside the case is reduced due to the thickness of the cap assembly, which is disadvantageous in terms of increasing battery capacity.

The above information disclosed in this Background section is for enhancement of understanding of the background of the present disclosure, and therefore, it may contain information that does not constitute related (or prior) art.

### SUMMARY

According to one or more embodiments of the present disclosure,a cap assembly includes a cap plate having a through hole therein, e.g. formed therein, a rivet terminal inserted into the through hole and placed through the cap plate, a terminal plate joined to one end of the rivet terminal on an upper surface of the cap plate, and a gasket inserted into the through hole, wherein the gasket insulates the cap plate and the rivet terminal, and wherein the rivet terminal has a maximum radial width less than the through hole.

The cap plate may include a pressing protrusion protruding radially inward from an inner peripheral surface of the through hole, wherein the pressing protrusion presses the gasket together with the rivet terminal.

The pressing protrusion may include an inclined guide surface facing a direction of insertion of the gasket.

The cap assembly may further include a current collector on a lower side of the cap plate, the current collector being connected to another end of the rivet terminal opposite the one end.

The current collector may have a planar shape, the current collector being parallel to the cap plate.

The rivet terminal may include a rivet body inserted into the gasket, a terminal joint protruding from one end of the rivet body, the terminal joint joined to the terminal plate, and a current collector connection protruding from another end of the rivet body opposite the one end of the rivet body, the current collector being connected to the another end of the rivet body.

A radial size of the current collector connection may be smaller than a radial size of the rivet body.

The gasket may include a gasket body into which the rivet body is inserted, and a gasket flange protruding radially from an outer peripheral surface of the gasket body, the gasket flange insulating the cap plate and the current collector.

The gasket body may include a joint groove, the joint groove being recessed inwards from the outer peripheral surface of the gasket body, the pressing protrusion being inserted into the joint groove.

A depth of the joint groove may be smaller than a length by which the pressing protrusion protrudes.

The joint groove may include a slope sloping downward in an insertion direction of the pressing protrusion.

The gasket flange may be in a recessed insertion groove on a lower surface of the cap plate.

A thickness of the gasket flange may be greater than a depth of the insertion groove.

A length of the rivet body may be equal to or less than a length of the gasket body.

The cap assembly may further include a lower insulator on, e.g. placed on, a lower side of the cap plate, the lower insulator covering the current collector.

The lower insulator may have a planar shape, at least a surface of the lower insulator facing the current collector and being parallel to the cap plate.

The cap assembly may further include an upper insulator between, e.g. placed between, the cap plate and the terminal plate, the upper insulator insulating the cap plate and the terminal plate.

The gasket is inserted into the upper insulator.

The cap plate may include an insulation layer on, e.g. provided on, a lower surface thereof for insulation.

According to one or more embodiments of the present disclosure a secondary battery includes an electrode assembly, a case in which the electrode assembly is accommodated, and a cap assembly that seals an opening of the case, wherein the cap assembly includes a cap plate having a through hole therein, a rivet terminal inserted into the through hole, the rivet terminal placed through the cap plate, a terminal plate electrically connected to the electrode assembly, the terminal plate being joined to one end of the rivet terminal on an upper surface of the cap plate, and a gasket inserted into the through hole, the gasket insulating the cap plate and the rivet terminal, wherein the rivet terminal has a maximum radial width less than the through hole.

According to some embodiments of the present invention, it is possible to reduce the assembly height of the cap assembly to secure additional space inside the case.

At least some of the above and other features of the invention are set out in the claims.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view showing an example of a cap assembly according to one or more embodiments of the present disclosure.
FIG. 2 is an exploded perspective view showing an example of the cap assembly according to one or more embodiments of the present disclosure.
FIG. 3 is a cross-sectional view showing an example of the cap assembly according to one or more embodiments of the present disclosure.
FIG. 4 is an enlarged view showing an example of area A in FIG. 3 according to one or more embodiments.
FIG. 5 is an exploded cross-sectional view showing an example of a rivet terminal and a gasket in a cap assembly according to one or more embodiments of the present disclosure.
FIG. 6 is an exploded cross-sectional view showing another example of a cap plate in the cap assembly according to one or more embodiments of the present disclosure.
FIG. 7 is an exploded cross-sectional view showing yet another example of the gasket in the cap assembly according to one or more embodiments of the present disclosure.
FIG. 8 is an exploded cross-sectional view showing still another example of the gasket in the cap assembly according to one or more embodiments of the present disclosure.
FIG. 9 is an exploded cross-sectional view showing an example of a current collector and a lower insulator in the cap assembly according to one or more embodiments of the present disclosure.
FIG. 10 is a cross-sectional view showing an example of a cap assembly of a comparative example.
FIG. 11 is a cross-sectional view comparing a rivet terminal of a comparative example with the rivet terminal according to one or more embodiments of the present disclosure.
FIG. 12 is a cross-sectional view comparing the cap assembly of the comparative example with the cap assembly according to one or more embodiments of the present disclosure.
FIG. 13 is a perspective view showing an example of a secondary battery according to one or more embodiments of the present disclosure.
FIG. 14 is an exploded perspective view showing an example of the secondary battery of FIG. 13 according to one or more embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

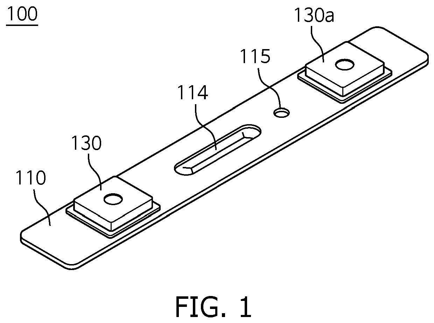

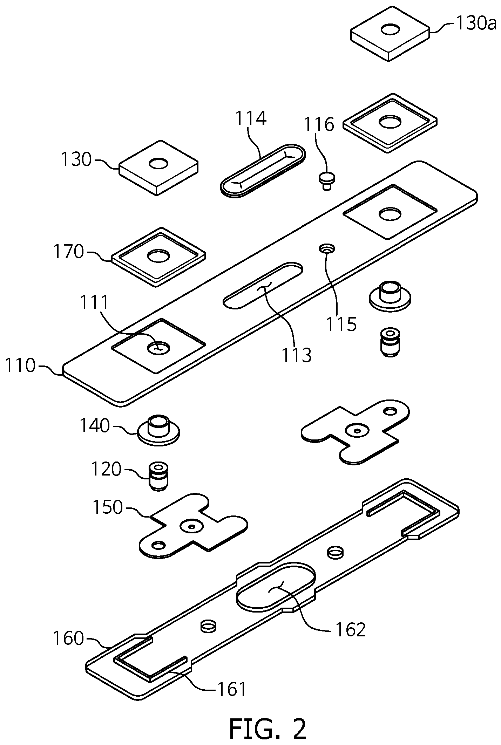

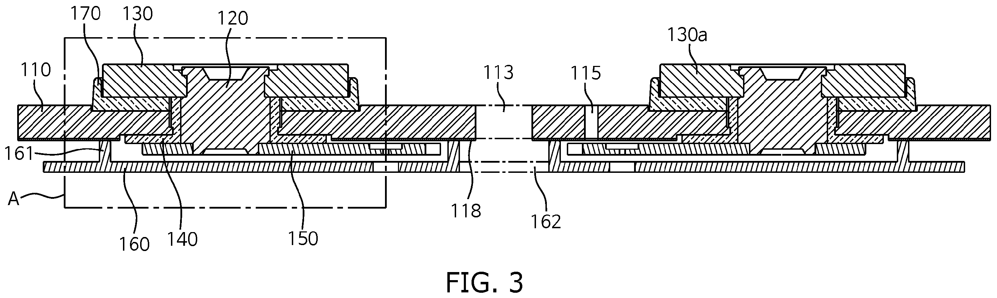

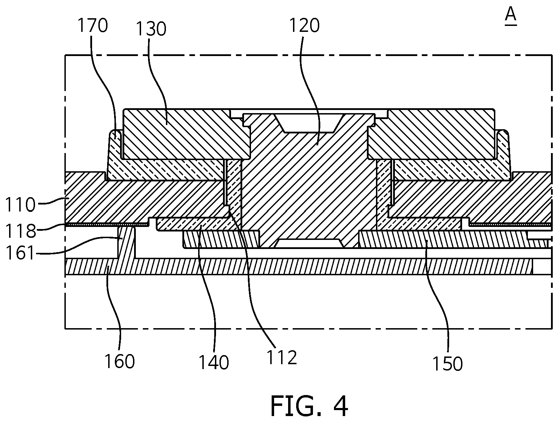

FIG. 1 is a perspective view showing an example of a cap assembly 100 according to some embodiments of the present disclosure, and FIG. 2 is an exploded perspective view showing an example of the cap assembly 100 according to some embodiments of the present disclosure. FIG. 3 is a cross-sectional view showing an example of the cap assembly 100 according to some embodiments of the present disclosure, and FIG. 4 is an enlarged view showing an example of area A in FIG. 3.

Referring to FIGS. 1 to 4, a cap assembly 100 according to some embodiments of the disclosure may include a cap plate 110 in which a through hole 111 is formed, a rivet terminal 120 that is inserted into the through hole 111 and placed through the cap plate 110, a terminal plate 130 that is joined to one end of the rivet terminal 120 on the upper surface of the cap plate 110, and a gasket 140 that is inserted into the through hole 111 and insulates the cap plate 110 and the rivet terminal 120. In addition, the cap assembly 100 may include a current collector 150 that is placed on the lower side of the cap plate 110 and is connected to the other end of the rivet terminal 120, and a lower insulator 160 that is placed on the lower side of the cap plate 110 and covers the current collector 150. The lower insulator 160 may include a support protrusion 161 that protrudes upwards and is supported on the cap plate 110.

The cap plate 110 may be a thin plate-shaped body made from conductive metal. According to some embodiments, the cap plate 110 may include the through hole 111 to which the rivet terminal 120 is joined, a vent hole 113 in which a vent plate 114 is installed, and an injection hole 115 through which the electrolyte is injected. In the drawings, the shape of the cap plate 110 is shown as a square (e.g., rectangular), but the cap plate 110 can be formed in any shape, such as a circle or polygon as long as the opening of the case in which the electrode assembly is accommodated can be hermetically sealed.

The lower surface of the cap plate 110 may have an insulation layer 118 for electrical insulation. The insulating layer 118 may be formed through coating of the insulating material or by attaching an insulating tape. In other embodiments, an insulating member manufactured as a separate structure may be placed on the lower surface of the cap plate 110.

The vent hole 113 may be configured to release gas from inside the cell to the outside if the internal pressure of the battery cell exceeds a critical range due to the occurrence of a thermal event, or the like. By emitting gases, flames, and other substances inside the battery cell through the vent hole 113, the internal pressure of the battery cell may be reduced.

According to one or more embodiments, the vent hole 113 may be an oblong hole formed in the center of the cap plate 110. Of course, the vent hole 113 may be a hole of any shape, not just oblong.

The vent hole 113 may be hermetically sealed with the vent plate 114. When the internal pressure of the battery cell exceeds the critical range, the vent plate 114 may break or be detached to the outside, allowing gas to be vented through the open vent hole 113. Due to this, the internal pressure of the battery cells may be reduced.

The injection hole 115 may penetrate through the cap plate 110, and may be provided to inject the electrolyte into the case after the cap plate 110 is joined to the opening of the case. The injection hole 115 may be injected with the electrolyte, and then be sealed with a sealing member 116.

A terminal plate functioning as an anode or a terminal plate functioning as a cathode is installed in the through hole 111 so that the plate may be electrically connected to the anode or cathode of the electrode assembly in the case. As shown in FIG. 2, two through holes may be provided. In this case, a terminal plate functioning as an anode may be installed in one of the through holes, and a terminal plate functioning as a cathode in the other through hole. Of course, it is possible that a single through hole is formed so that only one terminal is connected.

The terminal plate 130 may be placed on top of the through hole 111. The terminal plate 130 may be coupled to the rivet terminal 120 inserted into the through hole 111 for electrical connection. As shown in FIG. 2, two terminal plates may be provided. In this case, one terminal plate 130 may function as an anode, and the other terminal plate 130a may function as a cathode. Of course, only one terminal plate may be provided. A pressing protrusion 112 may be formed in the through hole 111 of the cap plate 110. By the pressing protrusion 112, the rivet terminal 120 may be inserted into and fitted and joined to the through hole 111 of the cap plate 110.

An upper insulator 170 is between the terminal plate 130 and the cap plate 110 so that the terminal plate 130 and the cap plate 110 may be electrically insulated from each other. Of course, if the terminal plate 130 functions as the same pole as the case, the upper insulator may not be provided. For example, when a cathode terminal is installed on the terminal plate 130 and the case also functions as a cathode, a separate upper insulator may not be provided.

The rivet terminal 120 may be inserted into the through hole 111 and may electrically connect the electrode assembly and the terminal plate 130. In other words, the terminal plate 130 may be joined to one end of the rivet terminal 120, and the current collector 150 electrically connected to the electrode assembly may be joined to the other end of the rivet terminal 120. Thus, the rivet terminal 120 may be installed through the cap plate 110 and electrically connect the electrode assembly placed inside the case and the terminal plate 130 placed on the outside of the case.

The gasket 140 may be inserted into the through hole 111, and the cap plate 110 and the rivet terminal 120 may be insulated. The gasket 140 made of the insulating material may be placed between the through hole 111 and the rivet terminal 120 so that the rivet terminal 120 and the cap plate 110 can be electrically insulated.

Of course, when the terminal plate 130 joined to the rivet terminal 120 functions as the same pole as the case, the gasket may not be provided. For example, when a cathode terminal is installed on the terminal plate 130 and the case also functions as a cathode, a separate gasket may not be provided.

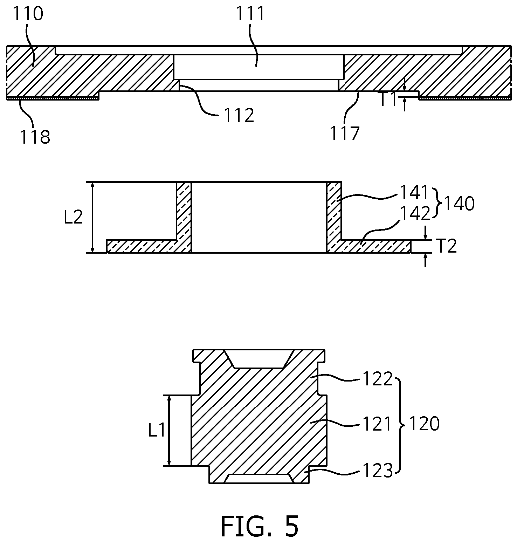

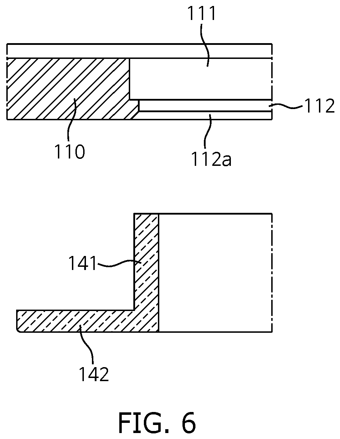

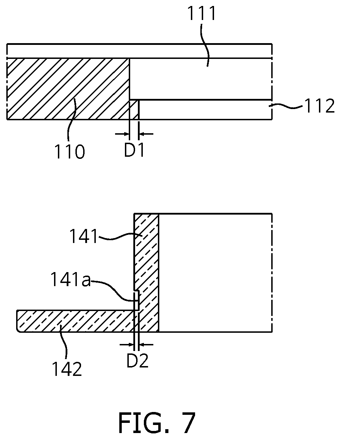

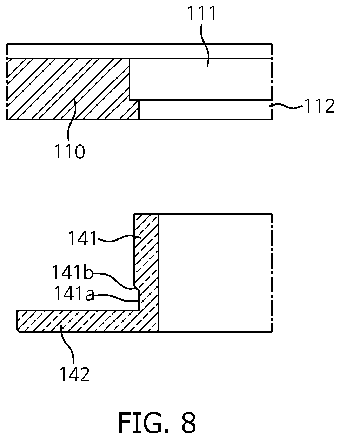

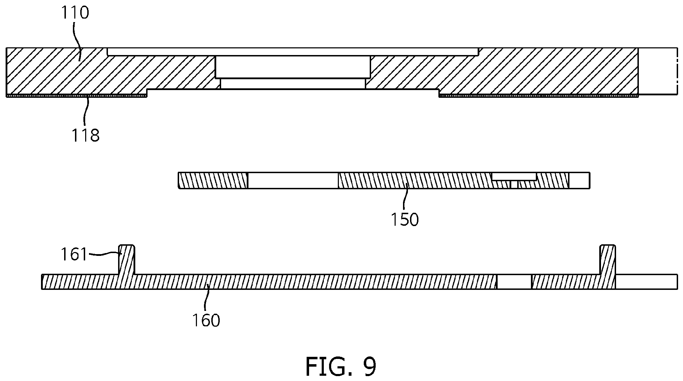

FIG. 5 is an exploded cross-sectional view showing an example of a rivet terminal and a gasket in a cap assembly according to some embodiments of the present disclosure, FIG. 6 is an exploded cross-sectional view showing another example of a cap plate in the cap assembly according to some embodiments of the present disclosure, FIG. 7 is an exploded cross-sectional view showing another example of the gasket in the cap assembly according to some embodiments of the present disclosure, and FIG. 8 is an exploded cross-sectional view showing still another example of the gasket in the cap assembly according to some embodiments of the present disclosure. Further, FIG. 9 is an exploded cross-sectional view showing an example of a current collector and a lower insulator in the cap assembly according to some embodiments of the present disclosure.

Referring to FIG. 5 to 9, the rivet terminal 120 according to some embodiments of the present disclosure may be configured to be inserted into the through hole 111 formed on the cap plate 110, and have a maximum width less than the through hole 111. In other words, the rivet terminal 120 may be inserted and placed in the through hole 111 as a whole.

In one or more embodiments, the rivet terminal 120 may include a rivet body 121 inserted into the gasket 140, a terminal joint 122 protruding from one side end of the rivet body 121 and joined to the terminal plate 130, and a current collector connection 123 which protrudes from the other end of the rivet body 121 and to which the current collector 150 is connected. Here, the rivet terminal 120 may be formed in a cylindrical shape. Of course, the shape of the rivet terminal 120 may instead have the form of a polygonal column.

The terminal joint 122 may protrude from one side (e.g., the end) of the rivet body 121, and may be formed to have a width, which is the radial size, being smaller than the radial size of the rivet body 121. The terminal joint 122 may have a width less than the width of the rivet body 121 such that the rivet body 121 is fitted and joined to the through hole 111. The terminal joint 122 may be joined to the terminal plate when the end is expanded by punching after being inserted into the terminal plate.

The current collector connection 123 may protrude from the other end of the rivet body 121, and may have a width, which is the radial size, being smaller than the radial size of the rivet body 121. The current collector connection 123 may be formed to have a width less than the width of the rivet body 121 such that the rivet body 121 is fitted and joined to the through hole 111.

Thus, the rivet body 121 may be formed to have a greater width than the terminal joint 122 and the current collector connection 123. The width which is the radial size of the rivet body 121 may be smaller than the through hole 111 formed on the cap plate 110. The rivet body 121, as shown in FIG. 4, may have a configuration that is surrounded by the gasket 140 and is not exposed to the outside.

The gasket 140 is made of a material having electrical insulation performance and elastic deformation, and may be inserted into the through hole 111 to insulate the cap plate 110 and the rivet terminal 120 from each other. For example, the gasket 140 may include a gasket body 141 into which the rivet body 121 is inserted, and a gasket flange 142 that protrudes radially from the outer peripheral surface of the gasket body 141 and insulates the cap plate 110 and the current collector 150. With this configuration, the gasket body 141 may be placed between the rivet body 121 and the through hole 111 to insulate the rivet terminal 120 and the cap plate 110, and the gasket flange 142 may be placed between the cap plate 110 and the current collector 150 so that the cap plate 110 and the current collector 150 may be insulated.

The gasket body 141 may have a length such that the gasket body 141 can be inserted into the upper insulator 170, as shown in FIG. 4, as the gasket body 141 is inserted into the through hole 111. The length (L1) of the rivet body 121 may be equal to or less than the length (L2) of the gasket body 141. Through this, the gasket body 141 may be disposed to encompass the entire area of the through hole 111 and the entire area of the rivet body 121, so that the cap plate 110 and the rivet body 121 may be electrically insulated.

The pressing protrusion 112 may be in the through hole 111 of the cap plate 110 such that the rivet terminal 120 is inserted into and fitted and joined to the through hole 111 of the cap plate 110. The pressing protrusion 112 may protrude radially inward from the inner peripheral surface of the through hole 111, and the gasket 140 may be pressed by the pressing protrusion 112 and the rivet terminal 120. For example, the thickness of the gasket body 141 may be formed in such a size corresponding to the size of the gap between the rivet terminal 120 and the through hole 111. With this configuration, if the rivet body 121 is inserted into the gasket body 141 while the gasket body 141 is inserted into the through hole 111, the rivet body 121 and the pressing protrusion 112 compress the gasket body 141, and the rivet body 121, the gasket body 141, and the pressing protrusion 112 can be forcibly fitted and joined to each other.

The pressing protrusion 112 may include an inclined guide surface 112a in the surface facing the direction in which the gasket 140 is inserted. The gasket body 141 may be sized such that the outer peripheral surface is in contact with the inner peripheral surface of the through hole 111. In this case, when the gasket 140 is inserted from the lower side of the cap plate 110, the upper end of the gasket body 141 is caught in the pressing protrusion 112, so that insertion may not be easy. Thus, a guide surface 112a is formed on the pressing protrusion 112 so that the gasket body 141 may be guided to be inserted more easily.

The gasket body 141 may include a joint groove 141a recessed inwards from the outer peripheral surface such that the pressing protrusion 112 is inserted. The joint groove 141a may be at the bottom of the outer peripheral surface of the gasket body 141 connecting with the gasket flange 142. With this configuration, if the gasket body 141 is inserted into the through hole 111 and the gasket flange 142 is in close contact with the bottom surface of the cap plate 110, the pressing protrusion 112 may be inserted into and joined to the joint groove 141a.

The depth (D2) of the joint groove 141a may be smaller than the length (D1) by which the pressing protrusion 112 protrudes. See FIG. 7. This is to secure the thickness for the gasket body 141 to be elastically pressurized by the rivet body 121 and the pressing protrusion 112, when the rivet body 121 is inserted while the pressing protrusion 112 is inserted to the joint groove 141a.

The joint groove 141a may include a slope 141b sloping downward in the direction in which the pressing protrusion 112 is inserted. With this configuration, when the gasket body 141 is inserted into the through hole 111 and is moved to make the gasket flange 142 in close contact with the bottom surface of the cap plate 110, the pressing protrusion 112 may move along the slope 141b to be inserted more accurately into the joint groove 141a.

The gasket flange 142 may be placed in a recessed insertion groove 117 formed on the lower surface of the cap plate 110. When the gasket flange 142 is in close contact with the cap plate 110 while the gasket body 141 is inserted into the through hole 111, as the gasket flange 142 is inserted into the insertion groove 117, the gasket 140 may be ⱼoined to the cap plate 110.

The thickness (T2) of the gasket flange 142 may be greater than the depth (T1) of the insertion groove 117. See FIG. 5. The current collector 150 joined to the current collector connection 123 of the rivet terminal 120 may be close contact with the gasket flange 142 and electrically insulated with the cap plate 110. In this case, the gasket flange 142 may be formed with a thickness that protrudes outward from the bottom surface of the cap plate 110 so that the current collector 150 does not come into contact with the cap plate 110 even in an area where the gasket flange 142 is not placed.

The current collector 150 may be connected to the current collector connection 123 of the rivet terminal 120, and may be electrically connected to the electrode assembly to electrically connect the electrode assembly and the rivet terminal 120. The current collector 150 may have a planar shape and be parallel to the cap plate 110 without bent and deformed areas. That is, the current collector 150 may be placed parallel to the cap plate 110 while connected to the rivet terminal 120.

The lower insulator 160 may be configured to cover the current collector 150 on the lower side of the cap plate 110. The lower insulator 160 may include a communication hole 162 (see FIG. 3), the center of which is penetrated to communicate with the vent hole 113 formed in the cap plate 110. The lower insulator 160 may have a planar shape in which at least a surface facing the current collector 150 is parallel to the cap plate 110. That is, the lower insulator 160 may be placed parallel to the cap plate 110 and the current collector 150 while facing the current collector 150. The lower insulator 160 may include a support protrusion 161 that protrudes upwards and is supported on the cap plate 110. Because the gasket flange 142 and the current collector 150 protrude from the lower side of the cap plate 110, a support protrusion 161 may be formed on the lower insulator 160 to secure a space in which the gasket flange 142 and the current collector 150 can be placed.

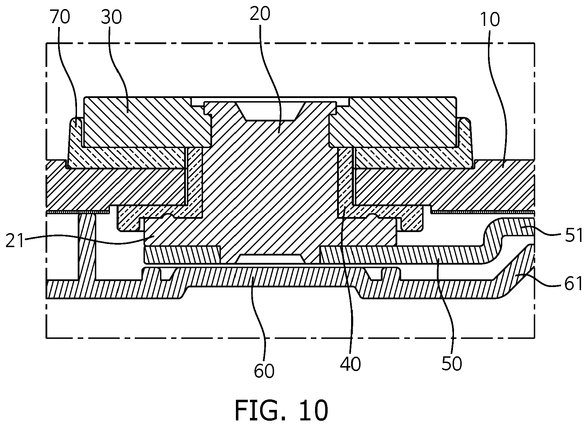

Hereinafter, with reference to FIGS. 10 to 12, a comparison is made between a cap assembly of a comparative example and the cap assembly 100 according to one or more embodiments of the present disclosure.

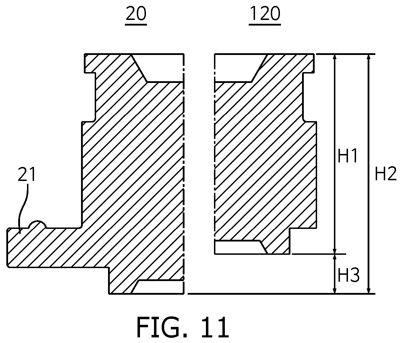

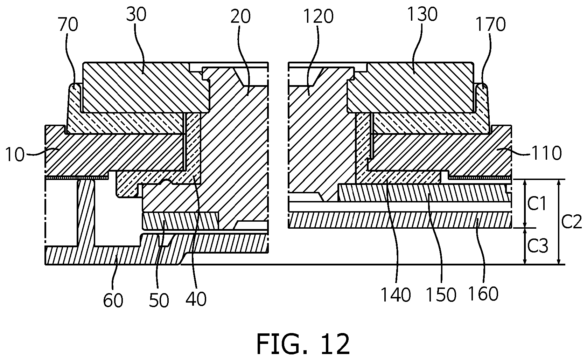

FIG. 10 is a cross-sectional view showing an example of a cap assembly of a comparative example, FIG. 11 is a cross-sectional view comparing a rivet terminal of a comparative example with the rivet terminal according to some embodiments of the present disclosure, and FIG. 12 is a cross-sectional view comparing the cap assembly of the comparative example with the cap assembly 100 according to the embodiment of the present disclosure.

Referring to FIG. 10, the cap assembly of the comparative example may be assembled in such a manner that the upper insulator 70 and terminal plate 30 are placed on the upper surface of the cap plate 10 where the through hole is formed, the gasket 40 and rivet terminal 20 are inserted into the through hole on the lower surface of the cap plate 10, and then the rivet terminal 20 is punched.

The rivet terminal 20 extends outwardly in the radial direction, and a flange 21 is formed whose diameter is greater than that of the through hole formed in the cap plate 10. The flange 21 is supported on the lower surface of the cap plate 10 while being in close contact with the gasket 40. In other words, the flange 21 of the rivet terminal 20 protrudes from the lower side of the cap plate 10 in the circumferential direction of the rivet terminal 20. As the flange 21 is formed at the rivet terminal 20, a bent portion 51 is formed in the current collector 50 to avoid the flange 21. In the lower insulator 60, a bent portion 61 is formed to correspond to (e.g., line up with) the bent portion 51 of the current collector 50.

Referring to FIG. 11, the rivet terminal 20 of the comparative example is formed with a flange 21 to be supported on the lower surface of the cap plate, so that the total height (H2) of the rivet terminal 20 of the comparative example is formed higher than the total height (H1) of the rivet terminal 120 of the present opening. In other words, the rivet terminal (20) of the comparative example may be formed to have a height (H3) corresponding to the thickness of the flange (21).

Accordingly, referring to FIG. 12, the cap assembly assembled with the rivet terminal 20 of the comparative example may be formed such that the height (C2) to the bottom surface of the lower insulator 60 from the lower surface of the cap plate 10 is higher than the height (C1) to the bottom surface of the lower insulator 160 from the lower surface of the cap plate 110 of the cap assembly assembled with the rivet terminal 120 of the present disclosure. In other words, the space inside the case becomes different by the difference in two heights (C3). Thus, the cap assembly 100 including the rivet terminals 120 according to one or more embodiments of the present disclosure may secure more internal space compared to the cap assembly of the comparative example.

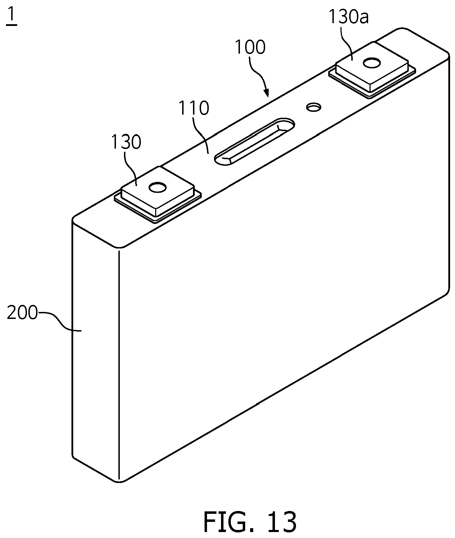

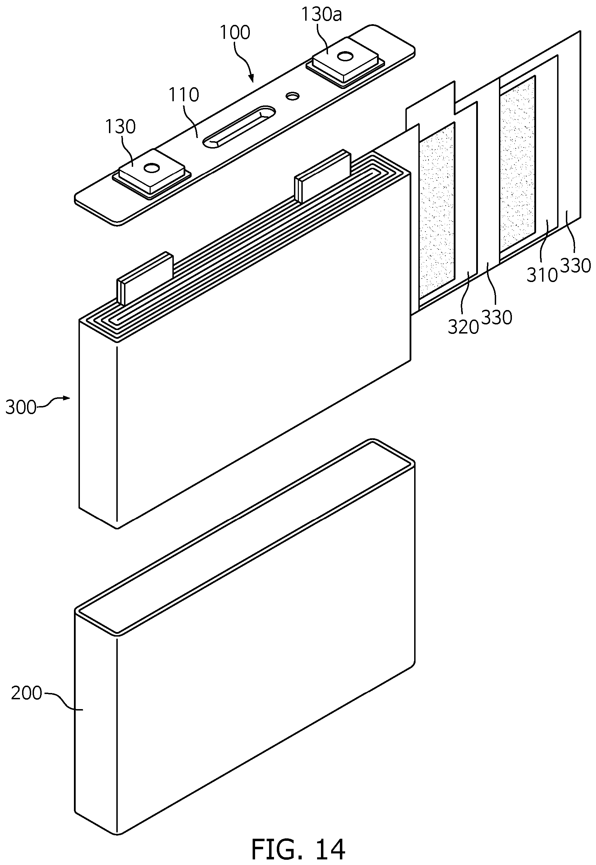

FIG. 13 is a perspective view showing an example of a secondary battery 1 according to some embodiments of the present disclosure, and FIG. 14 is an exploded perspective view showing an example of the secondary battery 1 according to some embodiments of the present disclosure.

Referring to FIGS. 13 and 14, the secondary battery 1 according to one or more embodiments of the present disclosure may include an electrode assembly 300, a case 200 in which the electrode assembly 300 is accommodated, and a cap assembly 100 that seals the opening of the case 200.

The electrode assembly 300 may be wound in jelly roll shape, including a first electrode 310, a separator 330, and a second electrode 320. Here, the first electrode 310 may be the anode, the second electrode 320 may be the cathode, or vice versa. In addition, the electrode assembly 300 may be in the form of a plurality of first electrodes, separator 330, and second electrodes sequentially stacked.

The case 200 may have an opening on one side and a hollow space to accommodate the electrode assembly 300 therein. The case 200 may be made of conductive metals such as aluminum, aluminum alloys, or nickel-plated steel. Alternatively, the case (200) may be made of stainless steel (SUS).

After the electrode assembly 300 is accommodated in the case 200, the cap assembly 100 is joined to the opening of the case 200 so that the case 200 can be hermetically sealed. Then, the first electrode 310 and the second electrode 320 of the electrode assembly 300 may be electrically connected to the terminal plates 130, 130a provided in the cap assembly 100, respectively.

Here, the cap assembly 100 has the same configuration as the cap assembly 100 described above in reference to FIGS. 1 to 12, so a detailed explanation is omitted.

Further, the secondary battery 1 described in reference to FIG. 13 and FIG. 14 is a lithium-ion secondary battery, and is explained as an example of a square (e.g., rectangular) battery. However, the secondary battery 1 may be various types of batteries, such as pouch-type batteries or cylindrical batteries.

According to some embodiments of the present disclosure, it is possible to reduce the assembly height of the cap assembly to secure additional space inside the case.

Recently, research for rapid charging and capacity improvement of secondary batteries has been actively conducted. In the case of a secondary battery in which an electrode assembly is housed in a case, and then the case and a cap assembly are assembled, there is a problem in that the space inside the case is reduced due to the thickness of the cap assembly, which is disadvantageous in terms of increasing battery capacity.

Although the present disclosure has been described with reference to embodiments and drawings illustrating aspects thereof, the present disclosure is not limited thereto. Various modifications and variations can be made by a person skilled in the art to which the present disclosure belongs within the scope of the technical scope of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A cap assembly (100), comprising:
a cap plate (110) having a through hole (111) therein;
a rivet terminal (120) inserted into the through hole (111) and placed through the cap plate (110);
a terminal plate (130) joined to one end of the rivet terminal (120) on an upper surface of the cap plate (110); and
a gasket (140) inserted into the through hole (111), wherein the gasket (140) insulates the cap plate (110) and the rivet terminal (120), and wherein the rivet terminal (120) has a maximum radial width less than the through hole (111).

2. The cap assembly (100) as claimed in claim 1, wherein the cap plate (110) comprises a pressing protrusion (112) protruding radially inward from an inner peripheral surface of the through hole (111), and wherein the pressing protrusion (112) presses the gasket (140) together with the rivet terminal (120).

3. The cap assembly (100) as claimed in claim 1 or 2, further comprising a current collector (150) on a lower side of the cap plate (110), the current collector (150) being connected to another end of the rivet terminal (120) opposite the one end.

4. The cap assembly (100) as claimed in claim 3, wherein the rivet terminal (120) comprises:
a rivet body (121) inserted into the gasket (140),
a terminal joint (122) protruding from one end of the rivet body (121), the terminal joint (122) joined to the terminal plate (130), and
a current collector connection (123) protruding from another end of the rivet body (121) opposite the one end of the rivet body (121), the current collector (150) being connected to the another end of the rivet body (121).

5. The cap assembly (100) as claimed in claim 4, wherein the gasket (140) comprises:
a gasket body (141) into which the rivet body (121) is inserted, and
a gasket flange (142) protruding radially from an outer peripheral surface of the gasket body (141), the gasket flange (142) insulating the cap plate (110) and the current collector (150).

6. The cap assembly (100) as claimed in claim 5, wherein the gasket body (141) comprises a joint groove (141a) recessed inwards from the outer peripheral surface of the gasket body (141), the pressing protrusion (112) being inserted into the joint groove (141a).

7. The cap assembly (100) as claimed in claim 6, wherein a depth of the joint groove (141a) is smaller than a length by which the pressing protrusion (112) protrudes.

8. The cap assembly (100) as claimed in claim 6 or 7, wherein the joint groove (141a) comprises a slope (141b) sloping downward in an insertion direction of the pressing protrusion (112).

9. The cap assembly (100) as claimed in any one of claims 5 to 8, wherein the gasket flange (142) is in a recessed insertion groove (117) on a lower surface of the cap plate (110).

10. The cap assembly (100) as claimed in claim 9, wherein a thickness of the gasket flange (142) is greater than a depth of the insertion groove (117).

11. The cap assembly (100) as claimed in any one of claims 5 to 10, wherein a length of the rivet body (121) is equal to or less than a length of the gasket body (141).

12. The cap assembly (100) as claimed in any one of claims 3 to 11, further comprising a lower insulator (160) on a lower side of the cap plate (110), the lower insulator (160) covering the current collector (150).

13. The cap assembly (100) as claimed in any preceding claim, further comprising an upper insulator (170) between the cap plate (110) and the terminal plate (130), the upper insulator (170) insulating the cap plate (110) and the terminal plate (130).

14. The cap assembly (100) of any preceding claim, wherein the cap plate (110) comprises an insulation layer (118) on a lower surface thereof for insulation.

15. A secondary battery (10), comprising:
an electrode assembly (300);
a case (200) in which the electrode assembly (300) is accommodated; and
the cap assembly (100) according to any preceding claim,
wherein the cap assembly (100) seals an opening of the case (200),
and wherein the terminal plate (130) is electrically connected to the electrode assembly (300).
